# EUROPÄISCHE PATENTSCHRIFT

(11) **EP 3 077 261 B1**
(45) Veröffentlichungstag und Bekanntmachung des Hinweises auf die Patenterteilung: **12.12.2018**
(21) Anmeldenummer: 14780485.0
(22) Anmeldetag: 02.10.2014
(51) Int. Cl.: B60W 30/04, B60T 8/17, B60W 10/06, B60W 10/184

(54) **ZWEIRADFAHRZEUG MIT FEDERWEGBASIERTER ANTRIEBS- UND BREMSLEISTUNGSBEGRENZUNG SOWIE STEUEREINHEIT HIERZU**
TWO-WHEELED VEHICLE WITH SPRING TRAVEL-BASED DRIVE AND BRAKING POWER LIMITATION AND CONTROL UNIT THEREFOR
VÉHICULE À DEUX ROUES AVEC LIMITATION DE LA PUISSANCE D'ENTRAÎNEMENT ET DE FREINAGE EN FONCTION DU DÉBATTEMENT AINSI QU'UNITÉ DE COMMANDE À CET EFFET

(30) Priorität: 03.12.2013 DE 102013224712
(43) Veröffentlichungstag der Anmeldung: 12.10.2016
(73) Patentinhaber: Robert Bosch GmbH, 70442 Stuttgart (DE)
(72) Erfinder: MOERBE, Matthias, 74360 Ilsfeld-Helfenberg (DE)
(86) Internationale Anmeldenummer: PCT/EP2014/071152
(87) Internationale Veröffentlichungsnummer: WO 2015/082095

(56) Entgegenhaltungen:
- EP-A2- 0 524 821
- EP-A2- 0 537 724
- WO-A1-2007/020271
- DE-A1- 19 531 742
- DE-A1- 19 532 521
- DE-A1-102005 018 484
- DE-A1-102006 027 608

## Beschreibung

Die Erfindung betrifft eine Steuereinheit zur Verwendung an einem Zweiradfahrzeug sowie ein Zweiradfahrzeug mit einer ersten Federvorrichtung eines Vorderrads und einer zweiten Federvorrichtung eines Hinterrads sowie mit zumindest einem Beschleunigungs- und Drehratensensor.

### Stand der Technik

Bei Zweiradfahrzeugen, insbesondere bei Elektrofahrrädern mit ABS-Bremsregelsystemen, wird ein Überschlag des Fahrzeugs nach vorne bei zu hohen Bremskräften und daraus resultierenden Momenten und Impulsen durch eine Bremsleistungsbegrenzung verhindert. Hierbei werden zumeist Drucksensoren verwendet, welche einen kritischen Fahrzustand detektieren. Weiterhin sind aus dem Stand der Technik Systeme bekannt, bei welchen zur Verhinderung eines Überschlags nach vorne Beschleunigungssensoren und Drehratensensoren eingesetzt werden.

Auch bei einer Begrenzung eines Überschlags nach hinten durch eine der jeweiligen Fahrsituation nicht entsprechende, zu hohe Antriebsleistung werden derartige Sensoren verwendet, um die Antriebsleistung und dabei insbesondere das Antriebsmoment in geeigneter Weise zu regeln.

Die DE 195 32 521 A1 offenbart eine Steuereinheit zur Verwendung an einem Zweiradfahrzeug, welches eine erste Federvorrichtung eines Vorderrads und eine zweite Federvorrichtung eines Hinterrads umfasst, wobei die Steuereinheit einen ersten und einen zweiten Federsensor umfasst, welche an der ersten bzw. der zweiten Federvorrichtung angeordnet sind, wobei die Steuereinheit so ausgebildet ist, dass eine Antriebsmomentenregelung am Hinterrad erst aktiviert wird, wenn der maximale Federweg am Vorderrad erreicht ist. WO 2007/020271 A1 offenbart ein Zweiradfahrzeug mit einer ersten Federvorrichtung eines Vorderrads und einer zweiten Federvorrichtung eines Hinterrads sowie mit zumindest einem Beschleunigungs- und Drehratensensor, welche an einem Fahrzeugrahmen angeordnet sind und mit einer Regelvorrichtung betriebsverbunden sind.

### Offenbarung der Erfindung

Bei einem erfindungsgemäßen Zweiradfahrzeug nach dem Anspruch 5 sind die erste und die zweite Federvorrichtung jeweils mit einem Federwegsensor versehen, welche wiederum mit einer erfindungsgemäßen Steuereinheit betriebsverbunden sind.

Die Erfindung bietet die Möglichkeit, zusätzlich zu den Daten des Beschleunigungs- und Drehratensensors die Straßenneigung oder Fahrbahnneigung zu berücksichtigen. Hierfür werden erfindungsgemäß mittels der dem Vorderrad und dem Hinterrad zugeordneten Federwegsensoren Federweginformationen generiert, die bei der Regelung verwendet werden. Solange das Vorderrad und das Hinterrad Kontakt mit der Fahrbahn oder der Straße haben, ergibt sich für das Zweiradfahrzeug ein stabiler Fahrzustand. Erst wenn eines der Räder bei einem Bremsvorgang bzw. einem Beschleunigungsvorgang von der Straße abhebt, kann dies zu einem unerwünschten Überschlag nach vorne bzw. nach hinten führen. Erfindungsgemäß wird deshalb mittels der Federwegsensoren der vorliegende Federweg ermittelt. Erst wenn die jeweiligen Maximalwerte des Federwegs überschritten werden, besteht die Gefahr, dass das Vorderrad bzw. das Hinterrad von der Straße abhebt. Dieser Zustand wird von der erfindungsgemäßen Regelung überwacht und verhindert.

Bevorzugterweise sind die Federwegsensoren als Weg- oder Winkelsensoren ausgebildet. Somit kann eine Ausfederung oder Einfederung der Vordergabel in bevorzugter Weiterbildung mittels eines Lasersensors ermittelt werden. In gleicher Weise kann erfindungsgemäß mittels des Winkelsensors ermittelt werden, welcher Federweg bei der zweiten Federvorrichtung für das Hinterrad vorliegt.

Es versteht sich, dass der erfindungsgemäß vorgesehene Beschleunigungs- und Drehratensensor als ein Bauteil oder als getrennte Bauteile ausgebildet sein kann.

Erfindungsgemäß werden somit die Werte der Federwegsensoren am Vorderrad bzw. am Hinterrad zusätzlich zu den Werten des Beschleunigungssensors und/oder des Drehratensensors für eine semi-aktive Fahrwerksregelung eingesetzt. Die Signale der Federwegsensoren werden somit für die Regelung eines Antriebsmomentes am Hinterrad und/oder einer Bremskraftregelung am Vorderrad mitverwendet, um eine optimale Beschleunigung oder Verzögerung unter jeder Fahrbahnbedingung zu gewährleisten. Da die Antriebskräfte bzw. die Bremskräfte sehr davon abhängen, ob das Fahrzeug bergauf oder bergab fährt und da auch die Belastung des Fahrzeugs durch Verschiebungen der Fahrer- und/oder Beifahrerpositionen stark variieren können, ist die erfindungsgemäß vorgesehene Information über die jeweiligen Federwege und insbesondere über eine vollständige Ausnutzung der Federwege eine zuverlässige Hilfsgröße für die Systemregelung.

Die erfindungsgemäße Steuereinheit zur Verwendung an einem Zweiradfahrzeug, welches eine erste Federvorrichtung eines Vorderrads und eine zweite Federvorrichtung eines Hinterrads sowie zumindest einen Beschleunigungs- und Drehratensensor umfasst, welche an einem Fahrzeugrahmen angeordnet sind, ist somit so ausgebildet, dass die Steuereinheit eine Antriebsmomentenregelung am Hinterrad erst aktiviert, wenn der maximale Federweg am Vorderrad (maximale Ausfederung am Vorderrad) erreicht ist, um einen Überschlag nach hinten zu vermeiden. Zur Vermeidung eines Überschlags nach vorne aktiviert die erfindungsgemäße Regelung eine Bremskraftregelung am Vorderrad erst dann, wenn der maximale Federweg am Hinterrad erreicht ist (maximale Ausfederung der zweiten Federvorrichtung am Hinterrad).

Erfindungsgemäß ist vorgesehen, dass eine Online-Kalibrierung zur Bestimmung der verfügbaren Federwege in einer Position des Zweiradfahrzeugs erfolgt, bei welcher sich dieses auf einer horizontalen Fahrbahn befindet und somit der Beschleunigungs- und Drehratensensor einen Winkel zur Erdanziehungsrichtung von im Wesentlichen Null ausgibt.

Die Steuereinheit bestimmt im Rahmen der erfindungsgemäßen Regelung, ausgehend von der Online-Kalibrierung, den jeweils verfügbaren Federweg der Federvorrichtung des Vorderrads und der Federvorrichtung des Hinterrads. Die jeweiligen Gesamtfederwege des Fahrzeugs können dabei bevorzugt systembedingt oder bauartbedingt vorgegeben werden. Dabei ist es bevorzugt, wenn der jeweilige maximale Federweg, der der Regelung zugrunde gelegt wird, kleiner ist, als der bauartbedingte mögliche Federweg, sodass ein unerwünschtes Abheben des jeweiligen Rades verhindert wird, um ausreichende Seitenführungskräfte und eine ausreichende Längsstabilität gewährleisten zu können. Dabei ist es auch günstig, wenn die Bremskraftregelung und/oder die Antriebsmomentenregelung abhängig vom Reibwert des Vorderrads bzw. des Hinterrads auf der Fahrbahn erfolgt.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Darstellung der Fahrzustände eines Zweiradfahrzeugs bei Normalfahrt, bei Bergfahrt und bei Talfahrt,
- Figur 2: eine schematische Darstellung eines neutralen Fahrzustands,
- Figur 3: eine Darstellung eines Fahrzustands mit maximaler Ausfederung der ersten Federvorrichtung am Vorderrad ohne Abheben des Vorderrads,
- Figur 4: eine Darstellung eines Fahrzustands bei Bergauffahrt bei maximaler Beschleunigung mit abhebendem Vorderrad,
- Figur 5: eine Darstellung eines Fahrzustands mit maximaler Verzögerung und maximalem Federweg des Hinterrads ohne Abheben des Hinterrads, und
- Figur 6: eine Darstellung eines Betriebszustands, analog Figur 5, bei Talfahrt mit maximaler Verzögerung und maximalem Federweg des Hinterrads mit abhebendem Hinterrad.

### Ausführungsformen der Erfindung

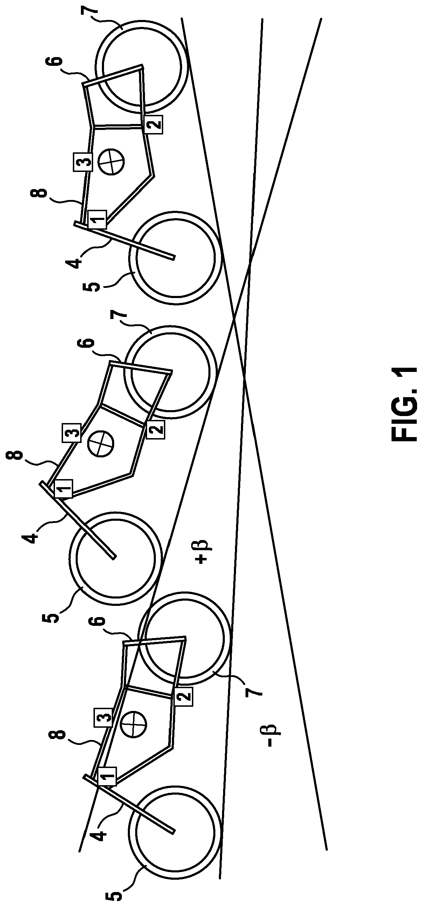

Die Figur 1 zeigt drei mögliche Fahrzustände eines Zweiradfahrzeugs. Dieses umfasst einen Fahrzeugrahmen 8, an welchem ein Vorderrad 5 und ein Hinterrad 7 gelagert sind. Das Vorderrad 5 ist mittels einer ersten Federvorrichtung 4, beispielsweise einer Federgabel, gelagert, das Hinterrad 7 ist mittels einer zweiten Federvorrichtung 6 an dem Rahmen gelagert, welche in Form einer Federschwinge ausgebildet sein kann. An dem Fahrzeugrahmen 8 ist ein Beschleunigungs- und Drehratensensor 3 angeordnet. Die erste Federvorrichtung 4 ist mit einem Federwegsensor 1 versehen, während ein Federwegsensor 2 an der zweiten Federvorrichtung 6 angeordnet ist.

Die Figur 1 zeigt drei mögliche Fahrzustände eines Zweiradfahrzeugs, nämlich in einer Ebene (linke Darstellung), bei Bergauffahrt (mittlere Darstellung) und bei Bergabfahrt (rechte Darstellung). Die jeweiligen Neigungswinkel für die Bergauffahrt und die Bergabfahrt sind mit β bezeichnet, wobei das Vorzeichen die entsprechende Fahrbahnneigung widergibt.

Die Federwegsensoren 1 und 2 erfassen die Aus- und Einfederung am Vorderrad 5 (Federwegsensor 1) sowie die Winkelstellung oder den Federweg am Hinterrad 7 (Federwegsensor 2). Durch eine Verschiebung des Schwerpunktes des Gesamtsystems je nach Größe und Vorzeichen des Winkels β wird auch der Federweg beeinflusst. Im Extremfall würde das Fahrzeug nach vorne oder hinten überschlagen, wenn der Schwerpunkt über den Aufstandspunkt des Vorderrads 5 oder des Hinterrads 7 verschoben wird.

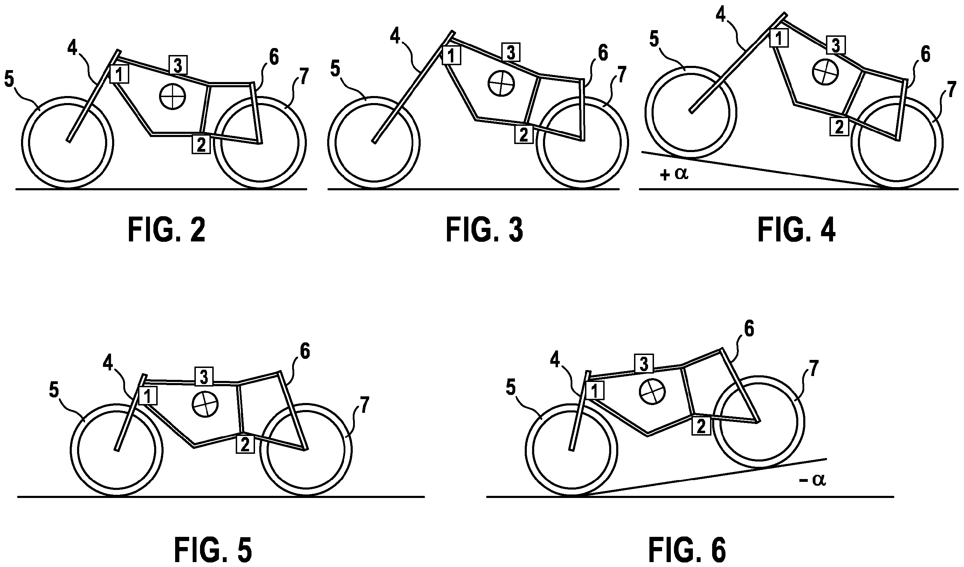

Die Figuren 2 bis 6 zeigen jeweils in schematischer Darstellung den Übergang von der in Figur 2 gezeigten neutralen Fahrposition in der Ebene zu den Fahrzuständen mit maximaler Beschleunigung und maximaler Verzögerung.

Bei hohen Beschleunigungen wird, ausgehend von der Darstellung gemäß Figur 2, zunächst der Einfederweg am Vorderrad 5 durch die statische Last aufgebraucht, bevor das Vorderrad 5 von der Fahrbahn mit einem Winkel α abhebt. Dieser Vorgang ist in den Figuren 2 bis 4 dargestellt. Der zentrale Beschleunigungs- und Drehratensensor 3 kann nicht unterscheiden, ob das Ausfedern der ersten Federvorrichtung 4 am Vorderrad 5 und das Abheben des Vorderrads 5 durch eine Neigung der Fahrbahn oder durch die auftretenden Lastmoment erzeugt wird. Erfindungsgemäß wird deshalb mittels des Federwegsensors 1 am Vorderrad der Federweg gemessen. Ergeben die durch den Federwegsensor 1 abgegebenen Werte, die Information, dass eine weitere Anpassung durch eine Erreichung des maximalen Federwegs oder durch Erreichen eines Endanschlags der ersten Federvorrichtung 4 nicht mehr möglich ist, so folgt daraus, dass der gemessene Winkel des Beschleunigungs- und Drehratensensors 3 mit dem Anteil der Steigung der Fahrbahn von α behaftet ist. Das Vorderrad 5 hat in einem derartigen Betriebszustand keinen Kontakt zur Fahrbahn mehr. Die erfindungsgemäße Regelung bewirkt zur Vermeidung eines Abhebens des Vorderrads 5 und zur Verhinderung eines Überschlags nach hinten eine Regelung des Antriebsmoments am Hinterrad 7.

Die Messung des Federwegs der ersten Federvorrichtung erfolgt bevorzugterweise mittels eines Lasers.

In analoger Weise erfolgt die erfindungsgemäße Regelung bei einem Übergang der neutralen Fahrposition gemäß Figur 2 zu den in den Figuren 5 und 6 gezeigten Betriebszuständen. Beim Bremsen erfolgt zunächst eine Einfederung der ersten Federvorrichtung 4. Die zweite Federvorrichtung 6 am Hinterrad 7 wird dabei bis zu einem Maximalwert ausfedern. Dies wird durch den Federwegsensor 2 am Hinterrad detektiert. Bei dem in Figur 6 gezeigten Betriebszustand (insbesondere bei Bergfahrt) wird somit das Hinterrad 7 abheben. Um diesen Vorgang und einen möglicherweise bevorstehenden Überschlag nach vorne zu vermeiden, erfolgt erfindungsgemäß eine Bremskraftregelung.

Die Messung des Federwegs am Hinterrad erfolgt bevorzugterweise mittels eines Winkelsensors.

Da sich beim Beschleunigen oder Bremsen die Hangabtriebskräfte jeweils addieren oder subtrahieren, ist die Weginformation der Federwegsensoren 1 und 2 ein Maß für die Begrenzung der Antriebs- und Bremskräfte. Da sich die geometrischen Bedingungen und Lasten bei einzelnen Zweiradfahrzeugen unterscheiden, insbesondere durch mechanische Änderungen der Federsysteme/Dämpfungssysteme sowie bei der jeweiligen Einsatzbedingung variieren (nur ein Fahrer oder ein zusätzlicher Beifahrer und/oder zusätzliches Gepäck) ist für die Bestimmung der Neutralposition erfindungsgemäß eine Online-Kalibrierung besonders vorteilhaft. Dies erfolgt in einer neutralen Fahrposition, in welcher der Beschleunigungs- und Drehratensensor 3 einen Winkel nahe Null zur Erdanziehung liefert und keine Geschwindigkeit oder Beschleunigung des Zweiradfahrzeugs vorliegt. Von einem derartigen Zustand aus können die Federwegsensoren 1 und 2 präzise die verfügbaren Federwege der ersten Federvorrichtung 4 und der zweiten Federvorrichtung 6 bestimmen.

Zur Verhinderung eines Überschlags nach hinten (Betriebszustände der Figuren 2, 3 und 4) erfolgt erfindungsgemäß bevorzugterweise die Regelung der Antriebskräfte so, dass entweder ein Restfederweg der Federvorrichtungen erhalten bleibt oder dass mittels des Beschleunigungs- und Drehratensensors 3 zum Zeitpunkt des Erreichens des maximalen Restfederwegs ein definierter Winkel α zugelassen wird. Dieser Winkel α kann reibwertabhängig veränderbar sein, um den Fahrbahnzustand berücksichtigen zu können. Dabei ist insbesondere eine Filterung der ermittelten Werte von α vorteilhaft.

Bei einem Bremsvorgang (Figuren 2, 5 und 6) ist für eine Bremsregelung im ABS-Betrieb erfindungsgemäß die Verzögerung des Fahrzeugs so zu wählen, dass das Hinterrad 7 immer am Boden bleibt oder dass ein definierter Winkel a, abhängig vom Reibwert, zugelassen wird. Für die Größe α wird die Regelung mit Hilfe von Sensor 3 bestimmt. Dabei wird bevorzugterweise die Regelung so ausgestaltet, dass die Seitenführungskraftgrenzen am Vorderrad 5 nicht unter ein Mindestmaß absinken.

Der Erfindung ist bei allen Zweiradfahrzeugen anwendbar, welche Federsysteme und einen regelbaren Antrieb sowie eine regelbare Bremse aufweisen.

## Patentansprüche

1. Steuereinheit zur Verwendung an einem Zweiradfahrzeug, welches eine erste Federvorrichtung (4) eines Vorderrads (5) und eine zweite Federvorrichtung (6) eines Hinterrads (7) sowie zumindest einen Beschleunigungs- und Drehratensensor (3) umfasst, welche an einem Fahrzeugrahmen (8) angeordnet sind,
wobei die Steuereinheit einen ersten (1) und einen zweiten (2) Federsensor umfasst, welche an der ersten (4) bzw. der zweiten (6) Federvorrichtung angeordnet sind, wobei die Steuereinheit so ausgebildet ist, dass eine Antriebsmomentenregelung am Hinterrad (7) erst aktiviert wird, wenn der maximale Federweg am Vorderrad (5) erreicht ist und/oder eine Bremskraftregelung am Vorderrad (5) erst aktiviert wird, wenn der maximale Federweg am Hinterrad (7) erreicht ist, wobei eine Online-Kalibrierung zur Bestimmung der verfügbaren Federwege in einer Position erfolgt, in welcher die Beschleunigungs- und Drehratensensor (3) einen Winkel zur Erdanziehungsrichtung von im Wesentlichen Null ausgibt.

2. Steuereinheit nach Anspruch 1, **dadurch gekennzeichnet, dass** die Antriebsmomentenregelung und/oder die Bremskraftregelung aktiviert werden, bevor der jeweilige maximale Federweg erreicht wird.

3. Steuereinheit nach einem der Ansprüche 1 oder 2, **dadurch gekennzeichnet, dass** die Bremskraftregelung und/oder die Antriebsmomentenregelung abhängig vom Reibwert des Vorderrads (5) und/oder des Hinterrads (7) erfolgt.

4. Steuereinheit nach einem der Ansprüche 1 bis 3, **dadurch gekennzeichnet, dass** die Bremskraftregelung und/oder die Antriebsmomentenregelung abhängig von Seitenführungskraftgrenzen des Vorderrads (5) und/oder des Hinterrads (7) erfolgt.

5. Zweiradfahrzeug mit einer ersten Federvorrichtung (4) eines Vorderrads (5) und einer zweiten Federvorrichtung (6) eines Hinterrads (7), sowie mit zumindest einem Beschleunigungs- und Drehratensensor (3), welche an einem Fahrzeugrahmen (8) angeordnet sind und mit einer Steuereinheit nach einem der Ansprüche 1 bis 4 betriebsverbunden sind, **dadurch gekennzeichnet, dass** die erste (4) und die zweite (6) Federvorrichtung jeweils mit einem Federwegsensor (1, 2) versehen sind, welche mit der Steuereinheit betriebsverbunden sind.

## Claims

1. Control unit for use on a two-wheeled vehicle, which comprises a first spring device (4) of a front wheel (5) and a second spring device (6) of a rear wheel (7) and at least one acceleration and rate-of-rotation sensor (3), which are arranged on a vehicle frame (8),
wherein the control unit comprises a first (1) and a second (2) spring sensor, which are arranged on the first (4) and the second (6) spring device, wherein the control unit is formed in such a way that drive torque control on the rear wheel (7) is activated only when the maximum spring travel on the front wheel (5) is reached and/or braking force control on the front wheel (5) is activated only when the maximum spring travel on the rear wheel (7) is reached,
wherein an online calibration for determining the available spring travels is carried out in a position in which the acceleration and rate-of-rotation sensor (3) outputs an angle of substantially zero relative to the direction of the Earth's gravitational force.

2. Control unit according to Claim 1, **characterized in that** the drive torque control and/or the braking force control are activated before the respective maximum spring travel is reached.

3. Control unit according to either of Claims 1 and 2, **characterized in that** the braking force control and/or the drive torque control is carried out as a function of the coefficient of friction of the front wheel (5) and/or the rear wheel (7).

4. Control unit according to one of Claims 1 to 3, **characterized in that** the braking force control and/or the drive torque control is carried out as a function of the lateral guidance force limits of the front wheel (5) and/or the rear wheel (7).

5. Two-wheeled vehicle comprising a first spring device (4) of a front wheel (5) and a second spring device (6) of a rear wheel (7), and comprising at least one acceleration and rate-of-rotation sensor (3), which are arranged on a vehicle frame (8) and are operationally connected to a control unit according to one of Claims 1 to 4, **characterized in that** the first (4) and the second (6) spring device are each provided with a spring travel sensor (1, 2), which are operationally connected to the control unit.

## Revendications

1. Module de commande, destiné à être utilisé sur un véhicule à deux roues, lequel comprend une première suspension (4) d'une roue avant (5) et une deuxième suspension (6) d'une roue arrière (7), ainsi qu'au moins un capteur d'accélération et de vitesse de rotation (3), lesquels sont placés sur le cadre du véhicule (8),
le module de commande comprenant un premier (1) et un deuxième (2) capteur de suspension, lesquels sont placés sur la première (4) ou la deuxième (6) suspension, le module de commande étant conçu de telle sorte qu'une régulation du couple d'entraînement sur la roue arrière (7) ne soit activée que lorsque le débattement maximum est atteint sur la roue avant (5) et/ou qu'une régulation de la force de freinage sur la roue avant (5) ne soit activée que lorsque le débattement maximum est atteint sur la roue arrière (7),
un calibrage en ligne s'effectuant pour déterminer les débattements disponibles dans une position dans laquelle le capteur d'accélération et de vitesse de rotation (3) délivre un angle de sensiblement zéro par rapport à la direction d'attraction terrestre.

2. Module de commande selon la revendication 1, **caractérisé en ce que** la régulation du couple d'entraînement et/ou la régulation de la force de freinage sont activées, avant que le débattement maximum respectif soit atteint.

3. Module de commande selon l'une quelconque des revendications 1 ou 2, **caractérisé en ce que** la régulation de la force de freinage et/ou la régulation du couple d'entraînement s'effectue en fonction de la valeur de friction de la roue avant (5) et/ou de la roue arrière (7).

4. Module de commande selon l'une quelconque des revendications 1 à 3, **caractérisé en ce que** la régulation de la force de freinage et/ou la régulation du couple d'entraînement s'effectue en fonction de limites d'adhérence latérale de la roue avant (5) et/ou de la roue arrière (7).

5. Véhicule à deux roues doté d'une première suspension (4) d'une roue avant (5) et d'une deuxième suspension (6) d'une roue arrière (7), ainsi que d'au moins un capteur d'accélération et de vitesse de rotation (3), lequel est placé sur un cadre du véhicule (8) et est fonctionnellement relié avec un module de commande selon l'une quelconque des revendications 1 à 4, **caractérisé en ce que** la première (4) et la deuxième (6) suspension sont munies chacune d'un capteur de débattement (1, 2) qui est fonctionnellement relié avec le module de commande.
